# EUROPEAN PATENT APPLICATION

(11) **EP 4 510 368 A1**
(43) Date of publication of application: **19.02.2025**
(21) Application number: 22956898.5
(22) Date of filing: 31.08.2022
(51) Int. Cl.: H01M 50/545, H01M 50/566, H01M 50/533

(54) **CELL, BATTERY, ELECTRIC DEVICE, AND MANUFACTURING METHOD FOR CELL**

(71) Applicant: Contemporary Amperex Technology Co., Limited, Ningde, Fujian 352100 (CN)
(72) Inventor: GU, Hui, Ningde, Fujian 352100 (CN); JIANG, Lingyan, Ningde, Fujian 352100 (CN); SUN, Dongsheng, Ningde, Fujian 352100 (CN); CHAI, Zhisheng, Ningde, Fujian 352100 (CN)
(74) Representative: Ran, Handong
(86) International application number: PCT/CN2022/116311
(87) International publication number: WO 2024/045072

(57) **Abstract**

The present application provides a cell, a battery, an electric device, and a manufacturing method for a cell. The cell comprises an electrode assembly, a shell and a current collector component. The electrode assembly is provided with tabs. The shell is used for accommodating the electrode assembly. The current collector component is accommodated in the shell and connected to the tabs. The current collector component is welded and connected to the inner side surface of the shell to form a first welding part, and the penetration depth formed by the first welding part on the shell is less than the thickness of the shell. Therefore, in the welding process, the shell is not broken down, and the first welding part cannot penetrate through the shell. Therefore, even if cracks are generated at the welding position between the current collector component and the shell, i.e., the first welding part, an electrolyte in the cell cannot overflow out of the shell from the cracks, so that the risk of electrolyte leakage is effectively reduced.

## Description

### TECHNICAL FIELD

This application relates to the field of battery technologies, and in particular, to a battery cell, a battery, an electric apparatus, and a manufacturing method of battery cell.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

**In** some cases, a battery can use a current collecting member to lead out a current and transport it to an electrical device, where the current collecting member is installed on the battery through welding, which may affect the sealing performance of the battery and lead to leakage of the electrolyte of the battery.

### SUMMARY

This application is intended to resolve at least one of the technical problems in the prior art. Therefore, an objective of this application is to provide a battery cell, a battery, an electric apparatus, and a manufacturing method of battery cell, so as to solve the problem of leakage of the electrolyte of the battery.

A first aspect of this application provides a battery cell. The battery cell includes an electrode assembly, a housing, and a current collecting member, where the electrode assembly is provided with a tab, the housing is configured to accommodate the electrode assembly, and the current collecting member is accommodated in the housing and connected to the tab. The current collecting member is welded to an inner side surface of the housing to form a first welding portion, with a welding depth formed by the first welding portion on the housing being less than a thickness of the housing.

In the technical solution of the embodiments of this application, the battery cell is such designed that the current collecting member is welded to the inner side surface of the housing to form the first welding portion, with a welding depth of the first welding portion formed on the housing being less than a thickness of the housing, such that during welding, the housing is not punctured and the first welding portion cannot penetrate through the housing. In this way, even if a crack occurs at a welding position, that is, the first welding portion, between the current collecting member and the housing, the electrolyte inside the battery cell cannot overflow to the outside of the housing from the crack, thereby effectively reducing the risk of electrolyte leakage.

In some embodiments, the housing has an opening, and the tab is located at one end of the electrode assembly close to the opening. In this way, at least the tab on the electrode assembly for connecting the current collecting member is close to the opening, such that electrical connection between the current collecting member and the tab can be easily achieved when the battery cell is assembled, with simple and efficient assembly.

In some embodiments, the inner side surface of the housing includes a first surface and a second surface, where the first surface is arranged opposite the electrode assembly, the second surface is located on a side of the first surface close to the opening of the housing, an orthogonal projection of the first surface along an axial direction of the electrode assembly coincides with an orthogonal projection of the second surface along the axial direction of the electrode assembly, and the first welding portion is formed on the second surface. This design ensures that the current collecting member can be welded to the inner side surface of the housing, and in addition, the structure of the housing is not reformed, thereby reducing the costs.

In some embodiments, the current collecting member includes a first connecting portion and a second connecting portion that are connected to each other, where the first connecting portion is connected to the tab, the second connecting portion fits with the inner side surface of the housing, and the second connecting portion is welded to the inner side surface of the housing to form at least one first welding portion. In this design, the second connecting portion of the current collecting member is arranged to fit with the inner surface of the housing, so as to ensure that the current collecting member can be welded and connected to the inner side surface of the housing. In this way, the structure of the housing does not need to be reformed.

In some embodiments, the second connecting portion is provided at an outer edge of the first connecting portion, and the second connecting portion is located on a side of a plane on which the first connecting portion is located. In this way, the second connecting portion protrudes from the first connecting portion, which can conveniently arrange the second connecting portion to fit with the inner side surface of the housing, thereby facilitating the welding connection between the second connecting portion and the inner side surface of the housing.

In some embodiments, at least part of the outer side surface of the second connecting portion fits with the inner side surface of the housing, where the outer side surface of the second connecting portion is a surface close to the inner side surface of the housing. Therefore, arranging at least part of the outer side surface of the second connecting portion to attach to the inner side surface of the housing can facilitate the welding connection between the second connecting portion and the inner side surface of the housing.

In some embodiments, the outer side surface of the second connecting portion integrally fits with the inner side surface of the housing, and the entire outer side surface of the second connecting portion closely fits with the inner side surface of the housing, further enhancing the stability of welding connection between the second connecting portion and the inner side surface of the housing.

In some embodiments, the first connecting portion has a flat structure, the outer side surface of the second connecting portion has a first projection on a plane on which the first connecting portion is located, and the first projection coincides with the outer side surface of the first connecting portion, where the outer side surface of the first connecting portion is a surface facing the inner side surface of the housing. In this embodiment, both the outer side surface of the second connecting portion and the outer side surface of the first connecting portion can be connected to the inner side surface of the housing through welding, thereby enhancing the stability of welding connection between the current collecting member and the inner side surface of the housing.

In some embodiments, the first welding portion does not penetrate through the second connecting portion along the axial direction of the electrode assembly, to be specific, when a laser beam is emitted onto the second connecting portion and the housing along a direction parallel to the axial direction of the electrode assembly to form the first welding portion, the laser beam does not penetrate through the second connecting portion, which can prevent the laser beam from being emitted onto the electrode assembly through the current collecting member and damaging the electrode assembly.

In some embodiments, the second connecting portion includes an abutting portion and a guide portion, where the abutting portion fits with the inner side surface of the housing, and at least part of the abutting portion is welded to the inner side surface of the housing; one end of the guide portion is connected to the abutting portion, and another end of the guide portion is connected to the first connecting portion; and a distance between the guide portion and the inner side surface of the housing gradually increases from one end to the another end of the guide portion.

In the foregoing technical solution, when the current collecting member is installed in the housing, the guide portion can play a guiding role so as to facilitate the installation of the current collecting member with high assembly efficiency.

In some embodiments, the first welding portion does not penetrate the abutting portion along the axial direction of the electrode assembly, to be specific, when a laser beam is emitted onto the abutting portion and the housing along a direction parallel to the axial direction of the electrode assembly to form the first welding portion, the laser beam does not penetrate the abutting portion, which can prevent the laser beam from being emitted onto the electrode assembly through the current collecting member and damaging the electrode assembly.

In some embodiments, the second connecting portion and the first connecting portion are fixedly connected through a connector; or the second connecting portion and the first connecting portion are formed into an integral member through an integral molding process.

In the foregoing technical solution, when the first connecting portion and the second connecting portion are formed into an integral member through the integral molding process, the assembly process of the first connecting portion and the second connecting portion is omitted, which is beneficial to improving the assembly efficiency of the battery cell, and in addition, the structural strength of the current collecting member can be effectively enhanced without increasing the costs.

In some embodiments, the current collecting member includes only one second connecting portion, where the second connecting portion is an annular structure extending along a circumferential direction of the inner side surface of the housing. With this design, the second connecting portion can closely fit with the entire circumference of the inner side surface of the housing for welding connection, thereby enhancing the connection stability.

In some embodiments, the second connecting portion is welded to the inner side surface of the housing to form a plurality of first welding portions, and the plurality of first welding portions are spaced apart from each other along the circumferential direction of the inner side surface of the housing. In this example, a plurality of first welding portions are evenly distributed between the second connecting portion and the housing, so as to enhance the connection reliability between the second connecting portion and the housing.

In some embodiments, at least two of the plurality of first welding portions are symmetrically arranged along a central axis of the housing. With this arrangement, at least two of the plurality of first welding portions are dispersedly and symmetrically arranged along the central axis of the housing, and the connection reliability between the current collecting member and the housing is enhanced.

In some embodiments, spacing angles of any two adjacent first welding portions along the circumferential direction of the inner side surface of the housing are equal. In this way, all the first welding portions are dispersed, which is beneficial to avoiding interference among the plurality of first welding portions; and in addition, the gravity exerted by the electrode assembly on the current collecting member and the gravity of the current collecting member itself can uniformly act on the plurality of first welding portions, so as to reduce the probability of tearing of the welding position due to uneven stress on the first welding portions between the second connecting portion and the housing, and further contribute to enhancing the connection reliability between the current collecting member and the housing.

In some embodiments, the second connecting portion is welded to the inner side surface of the housing to form the first welding portion, the first welding portion has an annular structure extending along the circumferential direction of the inner side surface of the housing, and the second connecting portion is sealingly connected to the housing. Therefore, the second connecting portion is connected to the entire circumference of the inner side surface of the housing through welding, thereby greatly enhancing the connection reliability between the second connecting portion and the housing. Moreover, with this design, the current collecting member can cover the opening of the housing for sealing.

In some embodiments, the current collecting member includes a plurality of second connecting portions, where the plurality of second connecting portions are spaced apart from each other along the circumferential direction of the inner side surface of the housing. In this embodiment, the current collecting member includes a plurality of second connecting portions, so as to locate the welding position between the current collecting member and the inner side surface of the housing.

In some embodiments, spacing angles of any two adjacent second connecting portions along the circumferential direction of the inner side surface of the housing are equal.

In some embodiments, each second connecting portion is welded to the inner side surface of the housing to form one first welding portion. With this design, the gravity exerted by the electrode assembly on the current collecting member and the gravity of the current collecting member itself can uniformly act on the plurality of first welding portions, so as to reduce the probability of tearing of the welding position due to uneven stress on the first welding portions between the second connecting portion and the housing, and further contribute to enhancing the connection reliability between the current collecting member and the housing.

In some embodiments, the housing includes a peripheral side wall, and an inner wall surface of the peripheral side wall forms the inner side surface of the housing, where a thickness of the peripheral side wall is a first thickness H1, a thickness of the second connecting portion is a second thickness H2, and 0.3≤H1/H2≤3.

The technical solution helps avoid the peripheral side wall of the housing being too thin and causing laser beam breakdown during welding, and further helps reduce the risk of leakage of the battery; and in addition, it is ensured that the second connecting portion has high structural strength, and even if the battery cell is in a vibration environment, the welding position between the second connecting portion and the housing is not easy to tear.

In some embodiments, 0.8≤H1/H2≤2.75. After a lot of experimental analysis by the inventors of this application, it was found that when a relation between the first thickness H1 and the second thickness H2 satisfies 0.8≤H1/H2≤2.75, the strength of the second connecting portion and the influence of the peripheral side wall on thickness can be better considered.

In some embodiments, 0.2 mm ≤H1≤0.6 mm; and/or 0.2 mm≤H2≤0.6 mm. This design is beneficial to ensuring that the ratio H1/H2 of the first thickness H1 to the second thickness H2 is 0.3≤H1/H2≤3 or 0.8≤H1/H2≤2.75.

In some embodiments, the first connecting portion is circular, the circular first connecting portion has a diameter of greater than or equal to 15 mm and less than or equal to 100 mm, and the second connecting portion has a height of greater than or equal to 0.1mm and less than or equal to 10 mm along the axial direction of the electrode assembly. In this way, the second connecting portion has a moderate height and high structural strength, such that the second connecting portion is prevented from occupying too much space in the height direction of the battery cell, ensuring the battery cell to have relatively high energy density.

In some embodiments, the housing has an opening and an opening end face surrounding the opening, and an end face of the second connecting portion facing away from the first connecting portion is flush with the opening end face of the housing; or an end face of the second connecting portion facing away from the first connecting portion is closer to the electrode assembly than the opening end face of the housing, and along the axial direction of the electrode assembly, a distance between the end face of the second connecting portion facing away from the first connecting portion and the opening end face of the housing is L1, where 0 mm≤L1≤2 mm.

In the technical solution, when the end face of the second connecting portion facing away from the first connecting portion is flush with the opening end face of the housing, it is easy to locate the installation position of the current collecting member; and when the distance L1 between the end face of the second connecting portion facing away from the first connecting portion and the opening end face of the housing satisfies 0 mm≤L1≤2 mm, this helps prevent the second connecting portion of the current collecting member from protruding out of the housing, and ensure that when the battery cell is provided with an end cover, the end cover can be in contact with the opening end face to seal the opening.

In some embodiments, the housing has an opening and an opening end face surrounding the opening, and the battery cell further induces an end cover covering the opening, where the end cover is welded to the opening end face of the housing to form a second welding portion, and there is a distance between the first welding portion and the second welding portion along the axial direction of the electrode assembly. In this way, it can be avoided that a laser beam is emitted onto the first welding portion when the end cover and the housing are melted using the laser beam to form the second welding portion, and the first welding portion is prevented from being affected by the second welding portion.

In some embodiments, part of the end cover overlaps the opening end face of the housing, and the second welding portion is such configured and formed that a laser beam is emitted in a direction parallel to the opening end face to melt the end cover and the housing.

In some embodiments, the housing has an opening and an opening end face surrounding the opening, and the battery cell further includes an end cover covering the opening, where the end cover is welded to the opening end face of the housing to seal the opening, the end cover includes a protruding portion protruding towards the inside of the housing, there is a gap between the protruding portion and the inner side surface of the housing, and the second connecting portion is at least partially accommodated in the gap.

The protruding portion is provided on the side of the end cover facing the inside of the housing, such that the structural strength of the end cover is increased, which is beneficial to improving the safety performance of the battery cell. In addition, when the second welding portion is configured to be formed by emitting a laser beam in the direction parallel to the opening end face to melt the end cover and the housing, the protruding portion can block the laser beam when the laser beam is emitted in the direction parallel to the opening end face after the end cover is closed to the housing.

In some embodiments, the protruding portion is in contact with a surface of the first connecting portion facing away from the electrode assembly; or along the axial direction of the electrode assembly, a distance between the protruding portion and the first connecting portion is L2, where 0 mm≤L2≤1 mm. Therefore, a gap between the protruding portion and the surface of the first connecting portion facing away from the electrode assembly is small, such that the welding position between the second connecting portion and the housing can be avoided from being torn due to excessive extrusion of the protruding portion on the first connecting portion, and the space occupied by the gap in the height direction of the battery cell can be reduced, such that the active material in the battery cell has relatively high capacity, thereby ensuring that the battery cell can have relatively high energy density.

In some embodiments, a base material of the housing is different from a base material of the current collecting member, and a melting point of the base material of the housing is greater than a melting point of the base material of the current collecting member. With this design, the melting point of the current collecting member is lower than that of the housing, and when the current collecting member is welded to the inner side surface of the housing from the inside of the housing, the housing is not easy to be punctured, which effectively reduces the risk of electrolyte leakage of the housing.

In some embodiments, a thermal expansion coefficient of the base material of the housing is less than a thermal expansion coefficient of the base material of the current collecting member.

In some embodiments, the base material of the housing is steel, and the base material of the current collecting member is copper or aluminum. On the premise of solving the problem of battery cell leakage, this design can not only make the housing have higher structural strength and enhance the safety of battery cell, but also reduce the manufacturing cost of the battery cell.

In some embodiments, a welding aid layer is provided on a surface of the housing and/or the current collecting member. Provision of such welding aid layer helps improve the welding effect between the current collecting member and the housing.

In some embodiments, the housing includes a base layer, the welding aid layer is provided on the base layer, and part of the first welding portion is located in the base layer. The welding aid layer has a small thickness. Therefore, the part of the first welding portion is designed to be located in the base layer, such that the current collecting member can be welded to the base layer of the housing, which is beneficial to enhancing the connection reliability between the current collecting member and the housing.

In some embodiments, the first welding portion does not penetrate the base layer of the housing. Because the thickness of the welding aid layer is small, the first welding portion is designed not to penetrate the base layer of the housing, which further ensures that the first welding portion does not penetrate through the housing, thereby reducing the probability of the electrolyte overflowing outside the housing due to cracks in the first welding portion.

Embodiments of a second aspect of this application provide a battery, including the battery cell according to the embodiments of the first aspect of this application.

Embodiments of a third aspect of this application provide an electric apparatus, including the battery according to the embodiments of the second aspect of this application.

Embodiment of a fourth aspect of this application provide a manufacturing method of battery cell, where the manufacturing method of battery cell includes the following steps: providing an electrode assembly, where the electrode assembly is provided with a tab; providing a housing; providing a current collecting member; connecting the current collecting member and the tab, and placing the electrode assembly and the current collecting member in the housing; welding the current collecting member to an inner side surface of the housing to form a first welding portion, and making a welding depth of the first welding portion formed on the housing be less than a thickness of the housing.

In some embodiments, the connecting the current collecting member and the tab, and placing the electrode assembly and the current collecting member in the housing specifically includes: connecting the current collecting member and the tab, and placing the electrode assembly connected to the current collecting member inside the housing; or placing the electrode assembly inside the housing, placing the current collecting member inside the housing, and connecting the current collecting member and the tab.

In some embodiments, the welding the current collecting member to an inner side surface of the housing to form a first welding portion specifically includes: emitting a laser beam from the inside of the housing in a direction perpendicular to the axial direction of the electrode assembly to melt the housing and the current collecting member to form the first welding portion; or emitting a laser beam in a direction parallel to the axial direction of the electrode assembly to melt the housing and the current collecting member to form the first welding portion.

In some embodiments, after the welding the current collecting member to an inner side surface of the housing to form a first welding portion, and making a welding depth of the first welding portion formed on the housing be less than a thickness of the housing, the manufacturing method further includes: providing an end cover; and welding the end cover and an opening end face of the housing to form a second welding portion, such that the second welding portion and the first welding portion have a distance in the axial direction of the electrode assembly.

In some embodiments, the welding the end cover and an opening end face of the housing to form a second welding portion specifically includes: overlapping part of the end cover on the opening end face of the housing; and emitting a laser beam in a direction parallel to the opening end face of the housing to melt the end cover and the housing to form a second welding portion.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in a plurality of accompanying drawings denote the same or similar components or elements. The accompanying drawings are not necessarily drawn to scale. It should be understood that these accompanying drawings merely describe some embodiments disclosed in this application, and should not be construed as a limitation on the scope of this application.
FIG. 1 is a partial schematic cross-sectional view of a battery cell in the related art;
FIG. 2 is a schematic structural diagram of a vehicle according to some embodiments of this application;
FIG. 3 is a schematic exploded view of a battery according to some embodiments of this application;
FIG. 4 is a schematic structural exploded view of a battery cell according to some embodiments of this application;
FIG. 5 is a front view of the battery shown in FIG. 4;
FIG. 6 is a schematic cross-sectional view of the battery cell in FIG. 5 along direction A-A;
FIG. 7 is a locally enlarged view of a location B in FIG. 6;
FIG. 8 is a schematic structural diagram of a current collecting member in a battery cell according to an embodiment of this application;
FIG. 9 is a schematic structural diagram of another current collecting member in a battery cell according to an embodiment of this application;
FIG. 10 is a partial schematic diagram of a connection between a second connecting portion and a housing in a battery cell according to another embodiment of this application;
FIG. 11 is a schematic structural diagram of still another current collecting member in a battery cell according to an embodiment of this application;
FIG. 12 is a partial schematic diagram of a connection between a second connecting portion and a housing in a battery cell of still another embodiment according to the embodiments of this application;
FIG. 13 and FIG. 14 are partial schematic diagrams of a connection between a second connecting portion and a housing in a battery cell of another embodiment according to the embodiments of this application;
FIG. 15 is a schematic flowchart of a manufacturing method of battery cell according to some embodiments of this application; and
FIG. 16 is a schematic flowchart of a manufacturing method of battery cell according to some other embodiments of this application.

### Description of reference signs:

1000. vehicle;
100. battery;
10. box; 11. first portion; 12. second portion;
20. battery cell; 21. housing; 211. peripheral side wall; 212. end wall; 213. base layer; 22. electrode assembly; 23. end cover; 231. protruding portion;
24. current collecting member; 241. first connecting portion; 242. second connecting portion; 25. pole; 26. first welding portion; 27. welding aid layer; 28. second welding portion;
200. controller; and
300. motor.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of accompanying drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the technical terms "mount", "connect", "join", and "fasten" should be understood in their general senses. For example, they may refer to a fixed connection, a detachable connection, or an integrated connection, may refer to a mechanical connection or an electrical connection, and may refer to a direct connection, an indirect connection through an intermediate medium, an internal connection between two elements, or an interaction between two elements. Persons of ordinary skill in the art can understand specific meanings of these terms in the embodiments of this application as appropriate to specific situations.

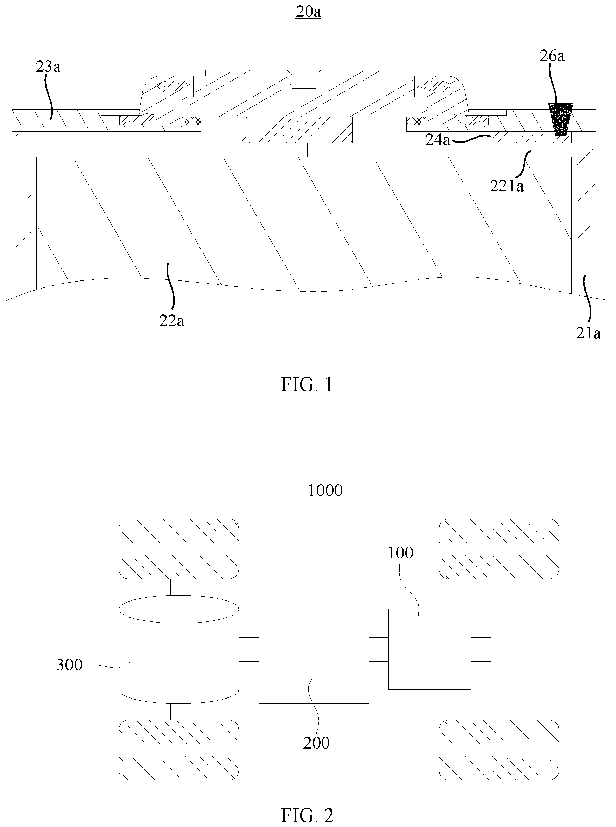

Traction batteries have become a new trend in energy development due to their high energy density, environmental protection, and other characteristics. Refer to FIG. 1. FIG. 1 is a partial schematic cross-sectional view of a battery cell in the related art. At present, a battery cell 200a of a battery typically includes a housing 21a, an electrode assembly 22a, a current collecting member 24a, and an end cover 23a. The electrode assembly 22a includes an electrode plate and a separator, an foil free zone is formed on a current collector of the electrode plate, and the foil free zone is flattened to form a tab 221a. The tab 221a is connected to the current collecting member 24a, and the current collecting member 24a is connected to the end cover 23a, such that the tab 221a, the current collecting member 24a, the end cover 23a, and the housing 21a are sequentially connected to form a conductive path for outputting electric energy. The current collecting member 24a is typically made of copper, and the end cover 23a is typically made of steel, such that the current collecting member 24a and the end cover 23a can conduct electricity, and the end cover 23a can also have high strength.

The assembling process of the battery cell 200a is roughly as follows: welding the tab 221a of the electrode assembly 22a to the current collecting member 24a, placing the electrode assembly 22a connected to the current collecting member 24a into the housing 21a, covering the end cover 23a on the housing 21a and welding the end cover 23a to the housing 21a, and welding the end cover 23a to the current collecting member 24a through laser external welding. However, the inventors found that micro-cracks are easy to appear at the welding position between the end cover 23a and the current collecting member 24a, which leads to the leakage of electrolyte in the battery.

After careful study, the inventors found that reasons for the micro-cracks at the welding position between the end cover 23a and the current collecting member 24a are as follows: The current collecting member 24a is made of copper and the end cover 23a is made of steel, the thermal expansion and thermal conductivity of copper are quite different from that of steel, and the expansion coefficient of copper is about 40% higher than that of iron. Therefore, the welding position between the end cover 23a and the current collecting member 24a generates greater stress, such that a welding portion 26a formed at the welding position is cracked due to greater stress. In addition, during welding, the current collecting member 24a is partially melted to form liquid copper, which has strong permeability to steel and produces micro-cracks on the crystal surface of steel during crystallization. However, the end cover 23a and the current collecting member 24a are welded through laser external welding. A laser beam penetrates the end cover 23a, a welding portion 26a is formed on the end cover 23a and the current collecting member 24a, and the welding portion 26a in turn penetrates the end cover 23a. Therefore, if any crack occurs at the welding portion 26a, the end cover 23a will not seal the housing 21a tightly, and the electrolyte in the housing 21a will easily overflow to the outside of the battery from the crack of the welding portion 26a on the end cover 23a, resulting in electrolyte leakage.

In response to this technical problem, the inventors thought of designing a welding connection between the current collecting member to the inner side surface of the housing of the battery cell, and the weld formed by welding the current collecting member to the housing does not penetrate through the housing. In this way, even if micro-cracks appear at the welding position between the current collecting member and the housing, the electrolyte cannot overflow to the outside of the battery from the cracks in the weld.

Further, the inventors found that when the end cover and the housing are welded together in the assembly process of the battery cell, the welding portion formed between the end cover and the housing is easy to affect the welding portion formed between the current collecting member and the housing. To this end, the inventors finally designed that the welding portion between the end cover and the housing has a space to the welding portion between the current collecting member and the housing.

The battery cell disclosed in the embodiments of this application may be used without limitation in an electric apparatus such as a vehicle, a ship, or an aircraft. The battery cell, battery, and the like disclosed in this application may be used to constitute a power supply system of that electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

Refer to FIG. 2. FIG. 2 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be provided at the bottom, front or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

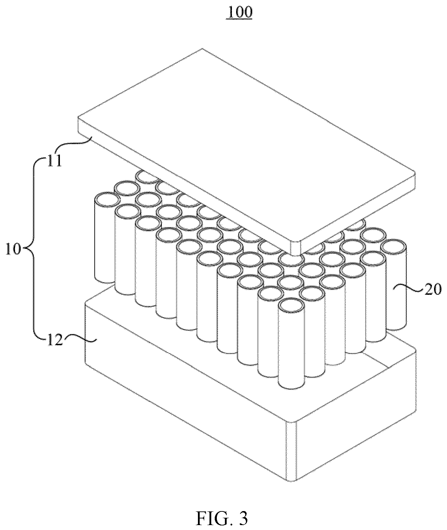

Refer to FIG. 3. FIG. 3 is a schematic exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 such that the first portion 11 and the second portion 12 jointly define an accommodating space; or the first portion 11 and the second portion 12 may both be hollow structures with one side open, where the open side of the first portion 11 is engaged with the open side of the second portion 12. The box 10 formed by the first portion 11 and the second portion 12 may be in various shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto.

A specific structure of the battery cell 20 is described in detail below with reference to the accompanying drawings.

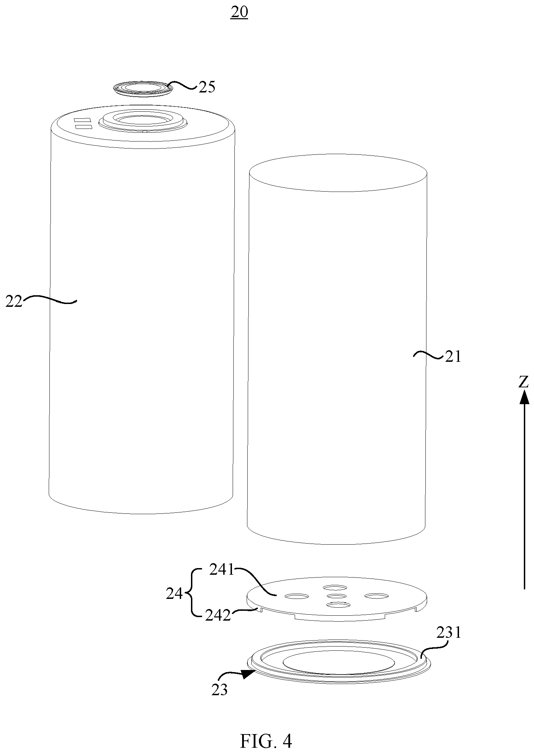

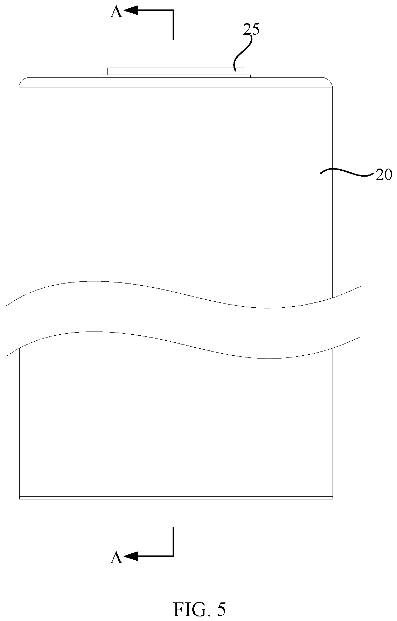

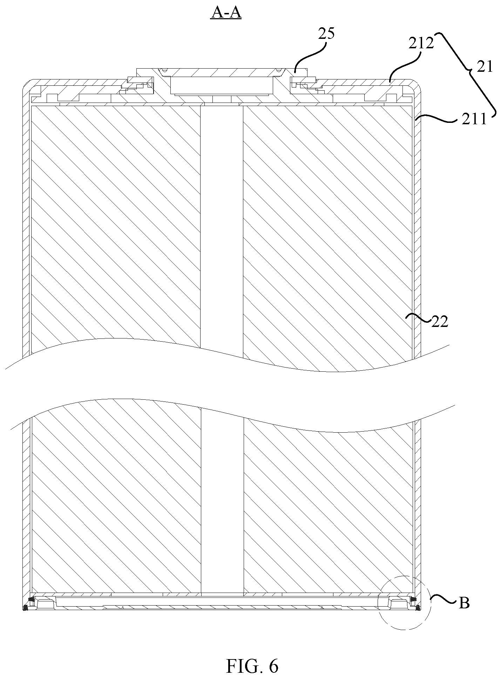

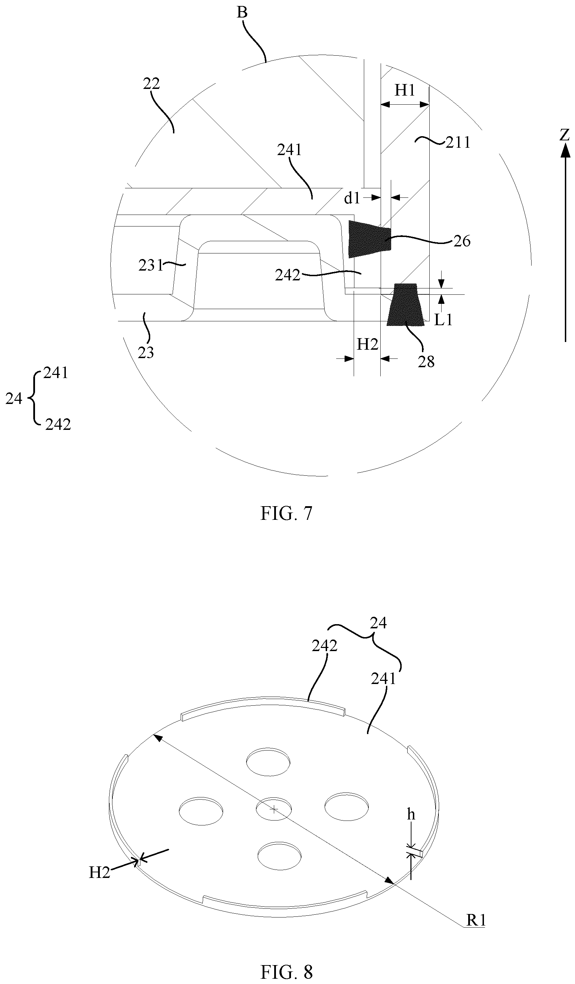

Refer to FIG. 4 to FIG. 7. FIG. 4 is a schematic structural exploded view of a battery cell 20 according to some embodiments of this application; FIG. 5 is a front view of the battery cell 20 shown in FIG. 4; FIG. 6 is a schematic cross-sectional view of the battery cell 20 shown in FIG. 5 along direction A-A; and FIG. 7 is a locally enlarged view of position B in FIG. 6.

According to some embodiments of this application, as shown in FIG. 4 to FIG. 7, the battery cell 20 includes an electrode assembly 22, a housing 21, and a current collecting member 24. The electrode assembly 22 has a tab. The housing 21 is configured to accommodate the electrode assembly 22. The current collecting member 24 is accommodated in the housing 21 and connected to the tab. The current collecting member 24 is welded to an inner side surface of the housing 21 to form a first welding portion 26, with a welding depth d1 formed by the first welding portion 26 on the housing 21 being less than a thickness H1 of the housing 21.

The battery cell 20 refers to a smallest element constituting the battery 100. The electrode assembly 22 is an assembly unit in the battery cell 20 where electrochemical reaction occurs. The electrode assembly 22 may include a main body and a tab, where the tab extends from the main body such that the tab protrudes from an end of the main body. The electrode assembly 22 may include a positive electrode plate, a negative electrode plate, and a separator. The electrode assembly 22 may be a wound structure formed by winding the positive electrode plate, the negative electrode plate, and the separator. The electrode assembly 22 may alternatively be a stacked structure formed by stacking the positive electrode plate, the negative electrode plate, and the separator. The positive electrode plate includes a positive electrode current collector and a positive electrode active substance layer coated on each of two opposite sides of the positive electrode current collector. The negative electrode plate includes a negative electrode current collector and a negative electrode active substance layer coated on each of two opposite sides of the negative electrode current collector. The main body is a portion of the electrode assembly 22 corresponding to a zone where an active material layer is coated on the electrode plate, and the tab is a portion where no active material layer is coated on the electrode plate.

The tab can be divided into a positive electrode tab and a negative electrode tab, where the positive electrode tab and the negative electrode tab may be arranged at two ends of the main body respectively or may be arranged at one end of the main body.

The current collecting member 24 can be specifically connected to one of the positive electrode tab and the negative electrode tab. For example, the current collecting member 24 is connected to the positive electrode tab, and the current collecting member 24 is welded to the housing 21, such that the electrode assembly 22, the positive electrode tab, the current collecting member 24, and the housing 21 are sequentially connected into a conductive path. In addition, the battery cell 20 may further include a pole 25, where the pole 25 can be connected to the other one of the positive electrode tab and the negative electrode tab. The pole being negative electrode tab is used as an example. In this way, the electrode assembly 22, the negative electrode tab, and the pole 25 are sequentially connected to form a conductive path for outputting electric energy. It should be understood that the pole 25 is insulated from the housing 21 to avoid short circuit of the battery cell 20.

The housing 21 may have a cavity in which the power supply electrode assembly 22 is accommodated. A shape of the housing 21 is not limited, for example, it may be a cylinder as shown in FIG. 4, or may be a cuboid, a hexagonal prism, or the like. When the housing 21 is a cylinder, its inner surface is an arc surface. It should be understood that the electrode assembly 22 is accommodated in the cavity, and an axial direction of the electrode assembly 22 is direction Z shown in FIG. 4.

The current collecting member 24 can be connected to the inner side surface of the housing 21 through welding. During welding, part of the current collecting member 24 and part of the housing 21 are melted, and the melted parts form a first welding portion 26. The first welding portion 26 can be formed by, for example, irradiating the current collecting member 24 with ultrasonic waves or laser beams. A welding depth d1 of the first welding portion 26 on the housing 21 is less than a thickness H1 of the housing 21, where the welding depth d1 of the first welding portion 26 on the housing 21 refers to a distance from the deepest point of the melting zone formed on the housing 21 to the surface of the housing 21. In this way, after the current collecting member 24 and the housing 21 are welded, the first welding portion 26 therebetween does not penetrate through the housing 21.

To sum up, the battery cell 20 of this embodiment is such designed that the current collecting member 24 is welded to the inner side surface of the housing 21 to form the first welding portion 26, with the welding depth d1 of the first welding portion 26 formed on the housing 21 being less than the thickness H1 of the housing 21, such that during welding, the housing 21 is not punctured and the first welding portion 26 cannot penetrate through the housing 21. In this way, even if a crack occurs at a welding position, that is, the first welding portion 26, between the current collecting member 24 and the housing 21, the electrolyte inside the battery cell 20 cannot overflow to the outside of the housing 21 from the crack, thereby effectively reducing the risk of electrolyte leakage.

According to some embodiments of this application, the housing 21 has an opening, and the tab is located at one end of the electrode assembly 22 close to the opening.

In some embodiments, the housing 21 has an opening and a cavity for accommodating the electrode assembly, and the opening of the housing 21 can communicate with the cavity. During assembly of the battery cell 20, the electrode assembly 22 and the current collecting member 24 can be installed into the cavity from the opening.

It should be noted that the tab is located at one end of the electrode assembly 22 close to the opening, which can be understood in a broad sense. To be specific, it can be understood that both the positive electrode tab and the negative electrode tab are located at one end of the electrode assembly 22 close to the opening. In this case, the positive electrode tab and the negative electrode tab are located at the same side of the electrode assembly 22, which is beneficial to reducing a space occupied by the tab in the housing 21. Alternatively, it can be understood that one of the positive electrode tab and the negative electrode tab connected to the current collecting member 24 is located at one end of the electrode assembly 22 close to the opening, the other one of the positive electrode tab and the negative electrode tab is located at the another end of the electrode assembly 22 far away from the opening, and the positive electrode tab and the negative electrode tab are located at different sides of the main body of the electrode assembly 22 in this case.

In this way, at least the tab on the electrode assembly 22 for connecting the current collecting member 24 is close to the opening, such that electrical connection between the current collecting member 24 and the tab can be easily achieved when the battery cell 20 is assembled, with simple and efficient assembly.

According to some embodiments of this application, the inner side surface of the housing 21 includes a first surface and a second surface, where the first surface is arranged opposite the electrode assembly 22, the second surface is located on a side of the first surface close to the opening of the housing 21, an orthogonal projection of the first surface along an axial direction of the electrode assembly 22 coincides with an orthogonal projection of the second surface along the axial direction of the electrode assembly 22, and the first welding portion 26 is formed on the second surface of the housing 21, to be specific, the current collecting member 24 is welded to the second surface to form the first welding portion 26.

In some embodiments, the housing 21 may be, for example, but not limited to, a straight cylinder. For example, the housing 21 is a cylinder, the first surface and the second surface are arc surfaces, and the orthogonal projection of the first surface along the axis of the housing coincides with the orthogonal projection of the second surface along the axis of the housing.

This design ensures that the current collecting member 24 can be welded to the inner side surface of the housing 21, and in addition, the structure of the housing 21 is not reformed, thereby reducing the costs.

Still refer to FIG. 4 to FIG. 7. According to some embodiments of this application, the current collecting member 24 includes a first connecting portion 241 and a second connecting portion 242 that are connected to each other, where the first connecting portion 241 is connected to the tab, the second connecting portion 242 fits with the inner side surface of the housing 21, and the second connecting portion 242 is welded to the inner side surface of the housing 21 to form at least one first welding portion 26.

In some embodiments, the first connecting portion 241 and the tab can also be connected through welding. According to some embodiments of this application, there are the following possible cases in the assembly process of the current collecting member 24 and the housing 21: In the first case, the first connecting portion 241 is welded to the tab, such that the current collecting member 24 is connected to the electrode assembly 22, the connected current collecting member 24 and the electrode assembly 22 are installed in the cavity, and the second connecting portion 242 is welded to the housing 21. In the second case, the electrode assembly 22 is installed in the cavity, the current collecting member 24 is installed in the cavity, the first connecting portion 241 is welded to the tab, and the second connecting portion 242 is welded to the housing 21.

Fitting of the second connecting portion 242 and the inner side surface of the housing 21 may mean that a shape and a size of the second connecting portion 242 are configured based on a shape and a size of the inner side surface of the housing 21, such that the second connecting portion 242 can be welded to the inner side surface of the housing 21. In other words, the structure of the housing 21 is not reformed, but the shape and size of the current collecting member 21 are configured to adapt to the inner side surface of the housing 21, such that the second connecting portion 242 can be welded to the inner side surface of the housing 21. A cylindrical battery is used as an example. The housing 21 of the cylindrical battery is cylindrical, and the inner surface of the housing 21 is arc-shaped. In the solution of the embodiments of this application, the cylindrical housing 21 is not reformed, but the shape and size of the current collecting member 21 are configured to adapt to the arc-shaped inner surface of the housing 21, such that the current collecting member 21 can be welded to the arc-shaped inner surface of the housing 21.

This design ensures that the current collecting member 24 can be connected to the tab through the first connecting portion 241 to implement the conductive function. In addition, the second connecting portion of the current collecting member is arranged to fit with the inner surface of the housing, so as to ensure that the current collecting member 24 can be welded and connected to the inner side surface of the housing. In this way, the structure of the housing 21 does not need to be reformed.

In some embodiments, both the first connecting portion 241 and the second connecting portion 242 may be plate-shaped, and the second connecting portion 242 surrounds the outside of the first connecting portion 241, such that the current collecting member 24 is constructed as a flat plate structure. In this embodiment, the outer side surface of the second connecting portion 242 is welded to the inner side surface of the housing 21. In this case, for example, the first welding portion 26 is formed by irradiating the current collecting member 24 with laser beams. The laser beam can be emitted between the second connecting portion 242 and the housing 21 along the axial direction Z parallel to the electrode assembly 22, such that the second connecting portion 242 and the housing 21 are melted to form the first welding portion 26.

According to some embodiments of this application, the second connecting portion 242 is provided at an outer edge of the first connecting portion 241, and the second connecting portion 242 is located on a side of a plane on which the first connecting portion 241 is located.

In some embodiments, the second connecting portion 242 may protrude from the first connecting portion 241 and extend in a direction toward the opening, so as to facilitate the welding connection between the second connecting portion 242 and the inner side surface of the housing 21.

For example, the first welding portion 26 is formed by irradiating the current collecting member 24 with laser beams. The laser beam can be emitted between the second connecting portion 242 and the housing 21 along the axial direction Z parallel to the electrode assembly 22 to form the first welding portion 26. Alternatively, the laser beam may be emitted onto the second connecting portion 242 in a direction perpendicular to the axial direction Z of the electrode assembly 22 to melt part of the second connecting portion 242 and part of the housing 21 to form the first welding portion 26.

In this way, the second connecting portion 242 protrudes from the first connecting portion 241, which can conveniently arrange the second connecting portion 242 to fit with the inner side surface of the housing 21, thereby facilitating the welding connection between the second connecting portion 242 and the housing 21.

According to some embodiments of this application, in the embodiment where the second connecting portion 242 is located on one side of the plane on which the first connecting portion 241 is located, at least part of the outer side surface of the second connecting portion 242 fits with the inner side surface of the housing 21 to ensure that the second connecting portion 242 can be welded to the housing 21. The second connecting portion 242 has an outer side surface and an inner side surface, and the outer side surface of the second connecting portion 242 is a surface of the second connecting portion 242 close to the inner side surface of the housing 21.

In some embodiments, to make the outer side surface of the second connecting portion 242 fit with the inner side surface of the housing 21, a shape and a size of the second connecting portion 242 are designed to fit with the inner side surface of the housing 21. Refer to FIG. 6 and FIG. 7. The housing 21 can be in a straight tube shape, and the first surface on the inner surface of the housing 21 for fitting with the second connecting portion 242 and other parts of the inner surface of the housing 21 together form an arc surface.

Therefore, arranging at least part of the outer side surface of the second connecting portion to attach to the inner side surface of the housing can facilitate the welding connection between the second connecting portion and the inner side surface of the housing.

According to some embodiments of this application, the entire outer side surface of the second connecting portion 242 fits with the inner side surface of the housing 21.

It can be understood that the outer side surface of the second connecting portion 242 can integrally fit with the inner side surface of the housing 21; or the outer side surface of the second connecting portion 242 only partially fits with the inner side surface of the housing 21.

With the outer side surface of the second connecting portion integrally fitting with the inner side surface of the housing, the stability of welding connection between the second connecting portion and the inner side surface of the housing can be further enhanced.

According to some embodiments of this application, as shown in FIG. 8, the first connecting portion 241 has a flat structure, the outer side surface of the second connecting portion 242 has a first projection on a plane on which the first connecting portion 241 is located, and the first projection coincides with the outer side surface of the first connecting portion 241, where the outer side surface of the first connecting portion 241 is a surface close to the inner side surface of the housing 21.

The second connecting portion 242 may be such configured that it protrudes from the surface of the first connecting portion 241 facing away from the electrode assembly 22, and the outer side surface of the second connecting portion 242 is coplanar with the outer side surface of the first connecting portion 241. In this case, both the outer side surface of the second connecting portion 242 and the outer side surface of the first connecting portion 241 can fit with the inner side surface of the housing 21.

The orthogonal projection of the outer side surface of the second connecting portion 242 on the plane on which the first connecting portion 241 is located is designed to coincide with the outer side surface of the first connecting portion 241, such that both the second connecting portion 242 and the first connecting portion 241 can closely fit with the inner side surface of the housing 21 for welding connection, and the stability of welding connection between the inner side surface of the current collecting member housing is enhanced.

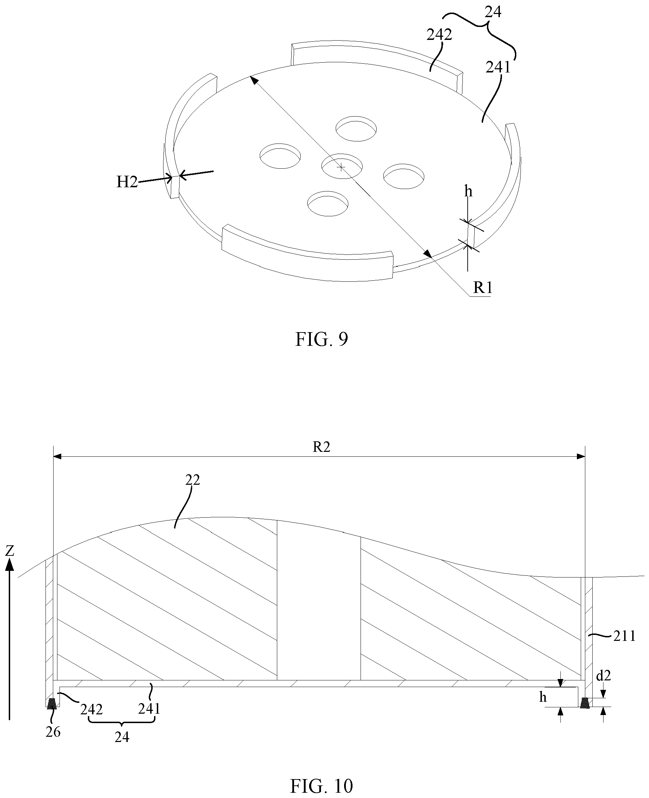

According to some other embodiments of this application, as shown in FIG. 9, the structure of the current collecting member 24 can also be such configured that the inner side surface of the second connecting portion 242 has a second projection on the plane on which the first connecting portion 241 is located, and the second projection coincides with the outer side surface of the first connecting portion 241. To be specific, the inner side surface of the second connecting portion 242 is connected to the outer side surface of the first connecting portion 241. In this case, the outer surface of the first connecting portion 241 is not in contact with the inner surface of the housing 21.

According to some embodiments of this application, the first welding portion 26 does not penetrate through the second connecting portion 242 along the axial direction of the electrode assembly 22.

In other words, a welding depth d2 formed by the first welding portion 26 on the second connecting portion 242 is less than a size h of the second connecting portion 242 in the axial direction Z of the electrode assembly 22.

It can be seen from the foregoing descriptions that the direction of laser beam irradiation is not limited using the first welding portion 26 being formed by irradiating a laser beam on the current collecting member 24 as an example. When the outer side surface of the second connecting portion 242 integrally fits with the inner side surface of the housing 21, for example, in the example shown in FIG. 7, a laser beam can be emitted onto the second connecting portion 242 in the direction perpendicular to the axial direction Z of the electrode assembly 22, and the laser beam penetrates through the second connecting portion 242 and is emitted onto the inner side surface of the housing 21, such that part of the second connecting portion 242 and part of the housing 21 are melted to form the first welding portion 26. Herein, the welding depth d1 of the first welding portion 26 formed on the housing 21 refers to the distance from the deepest point of the melting zone formed on the housing 21 to the inner surface of the housing 21.

For another example, in the example shown in FIG. 10, a laser beam can be emitted onto the second connecting portion 242 and the housing 21 along the direction parallel to the axial direction Z of the electrode assembly 22, such that part of the second connecting portion 242 and part of the housing 21 melt to form the first welding portion 26. In this example, the first welding portion 26 is configured not to penetrate through the second connecting portion 242 along the axial direction Z of the electrode assembly 22.

With this design, when a laser beam is emitted onto the second connecting portion 242 and the housing 21 along a direction parallel to the axial direction Z the electrode assembly 22 to form the first welding portion 26, the laser beam does not penetrate through the second connecting portion 242, which can prevent the laser beam from being emitted onto the electrode assembly 22 through the current collecting member and damaging the electrode assembly 22.

According to some embodiments of this application, in the embodiment where the outer side surface of the second connecting portion 242 only partially fits with the inner side surface of the housing 21, the second connecting portion 242 can be configured to include an abutting portion and a guide portion, where the abutting portion fits with the inner side surface of the housing 21, and at least part of the abutting portion is welded to the inner side surface of the housing 21; one end of the guide portion is connected to the abutting portion, and another end of the guide portion is connected to the first connecting portion 241; and a distance between the guide portion and the inner side surface of the housing 21 gradually increases from one end to the another end of the guide portion.

In this way, only part of the abutting portion of the second connecting portion 242 is welded to the inner side surface of the housing 21, or the entire abutting portion is welded to the inner side surface of the housing 21, and the guide portion is not connected to the inner side surface of the housing 21. The another end of the guide portion can be connected to the outer edge of the first connecting portion 241, or the another end of the guide portion can be connected to the middle of the first connecting portion 241. In this case, the another end of the guide portion is not located at the outer edge of the first connecting portion 241, so the second connecting portion 242 is not integrally provided at the outer edge of the first connecting portion 241.

In this way, the second connecting portion 242 not only has the abutting portion for welding with the outer side surface of the housing 21, but also has the guide portion, where the guide portion gradually approaches the central axis of the electrode assembly 22 from one end to the another end. When the current collecting member 24 of this example is installed in the housing 21, the guide portion can play a guiding role so as to facilitate the installation of the current collecting member 24 with high assembly efficiency.

According to some embodiments of this application, the first welding portion 26 does not penetrate through the abutting portion of the second connecting portion 242 along the axial direction of the electrode assembly 22.

In this case, a welding depth formed by the first welding portion 26 on the abutting portion is less than a size of the abutting portion in the axial direction Z of the electrode assembly 22.

It can be seen from the foregoing descriptions that the direction of laser beam irradiation is not limited using the first welding portion 26 being formed by irradiating a laser beam on the current collecting member 24 as an example. When the second connecting portion 242 includes a guide portion and an abutting portion, a laser beam can be emitted onto the abutting portion in a direction perpendicular to the axial direction Z of the electrode assembly 22, and the laser beam penetrates through the abutting portion and is emitted onto the inner side surface of the housing 21.

In some other embodiments, when the second connecting portion 242 includes a guide portion and an abutting portion, the laser beam can also be emitted onto the abutting portion and the housing 21 in a direction parallel to the axial direction Z of the electrode assembly 22, such that part of the abutting portion and part of the housing 21 are melted to form the first welding portion 26.

With this design, when a laser beam is emitted onto the abutting portion and the housing 21 along a direction parallel to the axial direction Z the electrode assembly 22 to form the first welding portion 26, the laser beam does not penetrate through the abutting portion, which can prevent the laser beam from being emitted onto the electrode assembly 22 through the current collecting member and damaging the electrode assembly 22.

According to some embodiments of this application, the first connecting portion 241 and the second connecting portion 242 are fixedly connected through a connector; or the second connecting portion 242 and the first connecting portion 241 are formed into an integral member through an integral molding process.

It can be understood that the connection mode between the first connecting portion 241 and the second connecting portion 242 is not limited. For example, the first connecting portion 241 and the second connecting portion 242 are fixedly connected through a connector, and the connector may be a screw, such that the first connecting portion 241 and the second connecting portion 242 are connected through screwing, or the connector may be a welding member, such that the first connecting portion 241 and the second connecting portion 242 are connected through welding.

When the first connecting portion 241 and the second connecting portion 242 are formed into an integral member through the integral molding process, the assembly process of the first connecting portion 241 and the second connecting portion 242 is omitted, which is beneficial to improving the assembly efficiency of the battery cell 20, and in addition, the structural strength of the current collecting member 24 can be effectively enhanced without increasing the costs.

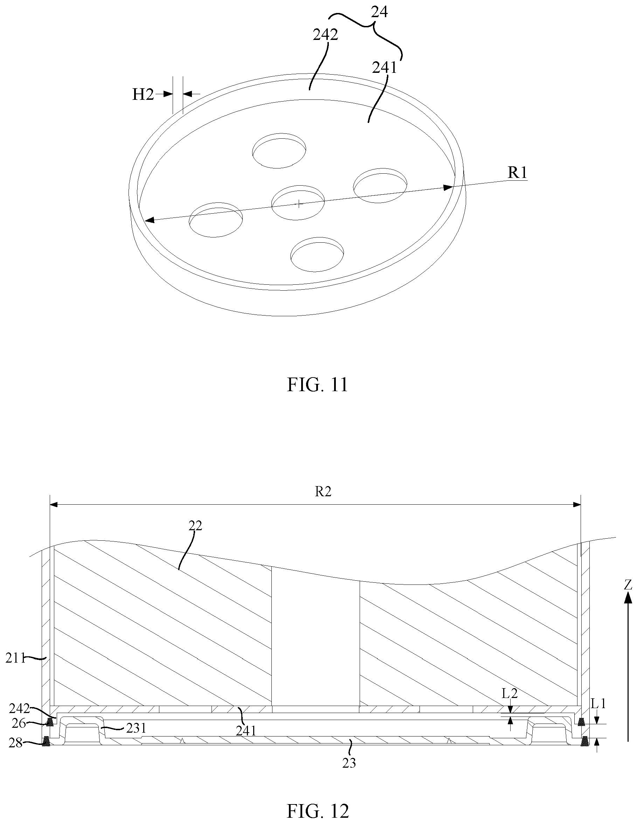

The number of the second connecting portions 242 in the current collecting member 24 is not limited. According to some embodiments of this application, as shown in FIG. 11, the current collecting member 24 may include only one second connecting portion 242, where the second connecting portion 242 is an annular structure extending along a circumferential direction of the inner side surface of the housing 21.

In some embodiments, the outer side surface of the second connecting portion 242 is an annular surface, and the second connecting portion 242 surrounds the outer side surface of the entire first connecting portion 241. When the second connecting portion 242 protrudes from the first connecting portion 241 and extends toward the opening, the second connecting portion 242 is connected to the entire circumference of the first connecting portion 241.

With this design, the second connecting portion 242 can closely fit with the entire circumference of the inner side surface of the housing 21 for welding connection, thereby enhancing the connection stability.

According to some other embodiments of this application, when the current collecting member 24 is provided with only one second connecting portion 242, the second connecting portion 242 is welded to the inner side surface of the housing 21, a plurality of first welding portions 26 can be formed between the second connecting portion 242 and the housing 21, and the plurality of first welding portions 26 are spaced apart from each other along the circumferential direction of the inner side surface of the housing 21. In other words, the second connecting portion 242 is welded to the inner side surface of the housing 21 at a plurality of positions.

In some embodiments, the second connecting portion 242 and the housing 21 can be connected through intermittent welding, such that a plurality of first welding portions 26 can be formed between the second connecting portion 242 and the housing 21.

As a result, the plurality of first welding portions 26 are formed between the second connecting portion 242 and the inner side surface of the housing 21, and the number of connections between the second connecting portion 242 and the housing 21 is increased, which is beneficial to enhancing the connection reliability between the second connecting portion 242 and the housing 21. Moreover, when the battery cell 20 of this embodiment is installed in the box with the opening of the housing 21 facing downward, the gravity of the electrode assembly 22 is exerted on the current collecting member 24. As there are the plurality of first welding portions 26, the gravity exerted by the electrode assembly 22 on the current collecting member 24 and the gravity of the current collecting member 24 itself act on the plurality of first welding portions 26, so as to prevent the welding position between the current collecting member 24 and the housing 21 from being easily torn due to excessive stress on the first welding portions 26.

According to some embodiments of this application, at least two of the plurality of first welding portions 26 are symmetrically arranged along a central axis of the housing 21.

It can be understood that only two first welding portions 26 in all the first welding portions 26 may be symmetrically arranged along the central axis of the housing 21. Alternatively, there are a plurality of groups of first welding portions 26 in all the first welding portions 26, and each group of first welding portions 26 consists of two first welding portions 26 symmetrically arranged along the central axis of the housing 21. In other words, every two first welding portions 26 among N first welding portions 26 are symmetrically arranged along the central axis of the housing 21, where N≥4, and N is an even number.

With this arrangement of this embodiment, at least two of the plurality of first welding portions 26 are dispersedly and symmetrically arranged along the central axis of the housing 21, and the connection reliability between the current collecting member 24 and the housing 21 is enhanced.

According to some embodiments of this application, spacing angles of any two adjacent first welding portions 26 along the circumferential direction of the inner side surface of the housing 21 are equal.

In other words, the first welding portions 26 between the second connecting portion 242 and the housing 21 are evenly distributed around the central axis of the housing 21.

In this way, all the first welding portions 26 are dispersed, which is beneficial to avoiding interference among the plurality of first welding portions 26; and in addition, the gravity exerted by the electrode assembly 22 on the current collecting member 24 and the gravity of the current collecting member 24 itself can uniformly act on the plurality of first welding portions 26, so as to reduce the probability of tearing of the welding position due to uneven stress on the first welding portions 26 between the second connecting portion 242 and the housing 21, and further contribute to enhancing the connection reliability between the current collecting member 24 and the housing 21.

According to some other embodiments of this application, when the current collecting member 24 is provided with only one second connecting portion 242, the second connecting portion 242 is welded to the inner side surface of the housing 21, and a plurality of first welding portions 26 can be formed between the second connecting portion 242 and the housing 21. The first welding portion 26 is an annular structure extending along the circumferential direction of the inner side surface of the housing 21, and the second connecting portion 242 is sealingly connected to the housing 21.

To be specific, as shown in FIG. 10, the second connecting portion 242 is welded to the entire circumference of the inner side surface of the housing 21, such that the first welding portion 26 can block the gap between the second connecting portion 242 and the inner side surface of the housing 21, and the second connecting portion 242 is sealingly connected to the housing 21. In this way, the current collecting member 24 covers the opening of the housing 21 to prevent the electrolyte in the cavity from leaking. It should be pointed out that the shape and size of the current collecting member 24 in this case are adapted to the housing 21 so as to achieve the sealing.

In some embodiments, the pole 25 can be mounted on the first connecting portion 241 of the current collecting member 24, and the pole 25 is insulated from the first connecting portion 241. In this case, the negative electrode tab may alternatively be at one end of the electrode assembly 22 close to the opening. Alternatively, the pole 25 may be mounted on the housing 21.

Therefore, the second connecting portion 242 is connected to the entire circumference of the inner side surface of the housing 21 through welding, thereby greatly enhancing the connection reliability between the second connecting portion 242 and the housing 21. Moreover, with this design, the current collecting member 24 can cover the opening of the housing 21 for sealing, with no need to additionally provide the end cover 23 to cover the opening, which is beneficial to simplifying the structure of the battery cell 20.

Still refer to FIG. 8 and FIG. 9. According to some embodiments of this application, the current collecting member 24 may include a plurality of second connecting portions 242, where the plurality of second connecting portions 242 are spaced apart from each other along the circumferential direction of the inner side surface of the housing 21.

Specifically, the number of the second connecting portions 242 may be four as shown in FIG. 8 and FIG. 9, or the number of the second connecting portions 242 may be two, three, five, or six, which are not enumerated in this embodiment.

Compared with a case that the current collecting member 24 includes one second connecting portion 242 and a plurality of first welding portions 26 are formed between the second connecting portion 242 and the housing 21, the current collecting member 24 in this embodiment includes a plurality of second connecting portions 242, such that a welding position between the current collecting member 24 and the inner side surface of the housing 21 can be easily identified.

According to some embodiments of this application, in the embodiment where the current collecting member 24 includes a plurality of second connecting portions 242, any two adjacent second connecting portions 242 may be spaced at an equal distance along the circumferential direction of the inner side surface of the housing 21.

In this way, the plurality of second connecting portions 242 are evenly distributed around the central axis of the housing 21, which facilitates the processing of the current collecting member 24.

According to some embodiments of this application, in the embodiment where the current collecting member 24 includes a plurality of second connecting portions 242 and any two second connecting portions 242 are evenly distributed around the central axis of the housing 21, each second connecting portion 242 is welded to the inner side surface of the housing 21 to form a first welding portion 26.

In this embodiment, a plurality of first welding portions 26 are formed between the current collecting member 24 and the housing 21, and the number of the first welding portions 26 is equal to the number of the second connecting portions 242. Since the plurality of second connecting portions 242 are evenly distributed around the central axis of the housing 21, the plurality of first welding portions 26 are spaced at substantially equal angles along the circumferential direction of the inner side surface of the housing 21.

With this design, the gravity exerted by the electrode assembly 22 on the current collecting member 24 and the gravity of the current collecting member 24 itself can uniformly act on the plurality of first welding portions 26, so as to reduce the probability of tearing of the welding position due to uneven stress on the first welding portions 26 between the second connecting portion 242 and the housing 21, and further contribute to enhancing the connection reliability between the current collecting member 24 and the housing 21.

According to some embodiments of this application, the housing 21 includes a peripheral side wall 211 and an end wall 212, an inner wall surface of the peripheral side wall 211 forms the inner side surface of the housing 21, and the end wall 212 is opposite the opening, where a thickness of the peripheral side wall 211 is a first thickness H1, a thickness of the second connecting portion 242 is a second thickness H2, and 0.3≤H1/H2≤3.

As shown in FIG. 6, when the pole 25 is mounted on the housing 21, the pole 25 can be mounted on the end wall 212 in an insulating manner. It can be understood that if the ratio H1/H2 of the first thickness H1 to the second thickness H2 is less than 0.3, the first thickness H1 is too small and the second thickness H2 is too large. In this way, the peripheral side wall 211 is too thin. When the second connecting portion 242 is welded to the peripheral side wall 211, the peripheral side wall 211 is easy to be broken down by the laser beam, which further leads to the phenomenon that the battery 100 is prone to electrolyte leakage. If the ratio H1/H2 of the first thickness H1 to the second thickness H2 is greater than 3, the first thickness H1 is too large and the second thickness H2 is too small. In this way, the second connecting portion 242 is too thin and has low structural strength. If the battery cell 20 is in a vibration environment, the second connecting portion 242 is difficult to bear vibration due to its low strength, which leads to the tearing of the welding position between the second connecting portion 242 and the peripheral side wall 211 and the rickety connection between the second connecting portion 242 and the peripheral side wall 211.

For example, the value of H1/H2 may be 0.3, 0.6, 1, 1.5, 1.8, 2, 2.6, or 3, which is not limited herein.

In this embodiment, the ratio H1/H2 of the first thickness H1 to the second thickness H2 is designed to be greater than or equal to 0.3 and less than or equal to 3. This is beneficial to avoiding the peripheral side wall 211 of the housing 21 being too thin and causing laser beam breakdown during welding, and further is beneficial to reducing the risk of leakage of the battery 100. In addition, it is ensured that the second connecting portion 242 has high structural strength, and even if the battery cell 20 is in a vibration environment, the welding position between the second connecting portion 242 and the housing 21 is not easy to tear.

According to some embodiments of this application, the ratio H1/H2 of the first thickness H1 to the second thickness H2 can be further designed to be greater than or equal to 0.8 and less than or equal to 2.75.

After a lot of experimental analysis by the inventors of this application, it was found that when a relation between the first thickness H1 and the second thickness H2 satisfies 0.8≤H1/H2≤2.75, the strength of the second connecting portion 242 and the influence of the peripheral side wall 211 on thickness can be better considered, the possibility that the peripheral side wall 211 of the housing 21 is broken down by the laser beam is further reduced, and the connection reliability between the second connecting portion 242 and the peripheral side wall 211 of the housing 21 is enhanced.

For example, the value of H1/H2 may be 0.8, 1.25, 1.6, 1.95, 2.4, or 2.75, which is not limited herein.

In the foregoing embodiment, the first thickness H1 can be designed to be greater than or equal to 0.2 mm and less than or equal to 0.6 mm, and the second thickness H2 can be designed to be greater than or equal to 0.2 mm and less than or equal to 0.6 mm.

For example, the specific values of the first thickness H1 and the second thickness H2 can be referred to Table 1, and Table 1 also shows the corresponding ratio H1/H2 of the first thickness H1 to the second thickness H2.

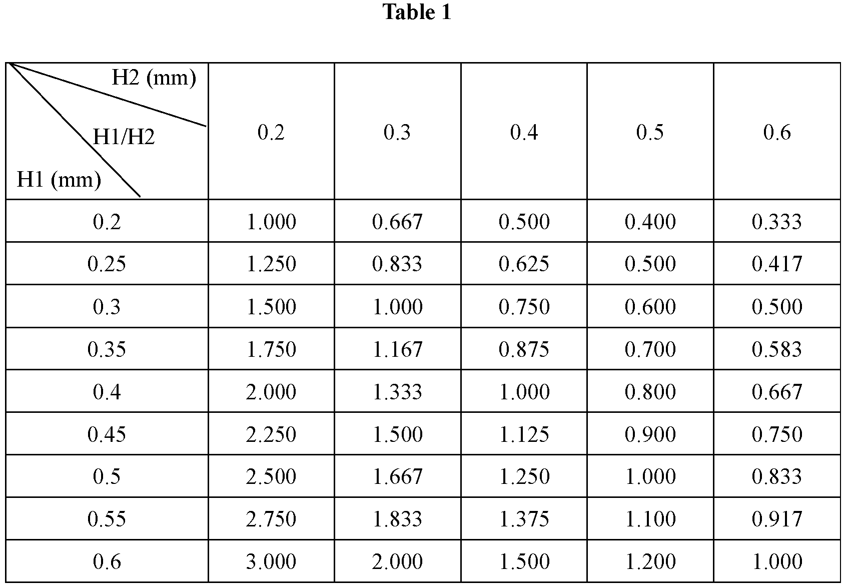

In some embodiments, when the value of H1/H2 ranges from 0.8 to 2.75, the value of the first thickness H1 can range from 0.3 mm to 0.55 mm, and the value of the second thickness H2 can range from 0.2 mm to 0.4 mm.

With 0.2 mm≤H1≤0.6 mm and 0.2 mm≤H2≤0.6 mm designed, it can be ensured that the housing 21 and the second connecting portion 242 are not welded through during the welding, thereby ensuring the sealing performance of the battery.

According to some embodiments of this application, the first connecting portion 241 is circular, and the circular first connecting portion 241 has a diameter R1 greater than or equal to 15 mm and less than or equal to 100 mm. For example, the diameter R1 of the first connecting portion 241 may be 15 mm, 30 mm, 50 mm, 75 mm or 100 mm, which is not limited herein.

When the current collecting member 24 is shown in FIG. 8, the outer side surface of the first connecting portion 241 is coplanar with the outer side surface of the second connecting portion 242, such that when the outer side surface of the first connecting portion 241 also fits with the inner side surface of the housing 21, an inner diameter R2 of the housing 21 is equal to the diameter R1 of the first connecting portion 241, and the first connecting portion 241 can adapt to the housing 21. When the current collecting member 24 is shown in FIG. 9 and FIG. 10, the outer side surface of the first connecting portion 241 is connected to the inner side surface of the second connecting portion 242, and the outer side surface of the second connecting portion 242 fits with the inner side surface of the housing 21, the inner diameter R2 of the housing 21, the second thickness H2, and the diameter R1 of the first connecting portion 241 satisfy R1+2×H2=R2.

When the second connecting portion 242 is located on one side of the plane on which the first connecting portion 241 is located, the second connecting portion 242 has a height H3 greater than or equal to 0.1 mm and less than or equal to 10 mm along the axial direction of the electrode assembly 22.

For example, the height h of the second connecting portion 242 in the axial direction of the electrode assembly 22 may be, but is not limited to, 0.1 mm, 1 mm, 5 mm, 7 mm, or 10 mm.

With the height h of the second connecting portion 242 along the axial direction of the electrode assembly 22 designed to be in the range of 0.1 mm to 10 mm, the second connecting portion 242 has a moderate height and high structural strength, such that the second connecting portion 242 is prevented from occupying too much space in the height direction of the battery cell 20, ensuring the battery cell 20 to have relatively high energy density.

According to some embodiments of this application, the housing 21 includes an opening end face surrounding the opening, and there are various cases in the positional relationship between the second connecting portion 242 and the opening end face of the housing 21.

In a first case, as shown in FIG. 10, the end face of the second connecting portion 242 facing away from the first connecting portion 241 is flush with the opening end face of the housing 21. In this example, when the battery cell 20 is provided with an end cover 23, and the end cover 23 is connected to the opening end face to cover the opening, the end cover 23 can also fit with the end face of the second connecting portion 242 facing away from the first connecting portion 241, which is beneficial to further improving the sealing performance of the end cover 23 to the opening.

In a second case, as shown in FIG. 7, the end face of the second connecting portion 242 facing away from the first connecting portion 241 is closer to the electrode assembly 22 than the opening end face of the housing 21. In the axial direction of the electrode assembly 22, a distance between the end face of the second connecting portion 242 facing away from the first connecting portion 241 and the opening end face of the housing 21 is L1, where 0 mm≤L1≤2 mm.

It should be noted that the end face of the second connecting portion 242 facing away from the first connecting portion 241 may be flat or inclined. For example, when the end face of the second connecting portion 242 facing away from the first connecting portion 241 is inclined, L1 refers to a minimum distance between the end face of the second connecting portion 242 facing away from the first connecting portion 241 and the opening end face. The reason why the end face of the second connecting portion 242 facing away from the first connecting portion 241 is formed as an inclined plane can also be a machining error or an installation error of the current collecting member 24. To be specific, when a low machining accuracy of the current collecting member 24 results in poor flatness of the end face of the second connecting portion 242 facing away from the first connecting portion 241, and the end face is an inclined plane, the minimum distance between the end face and the opening end face is L1; and when a low assembly accuracy of the current collecting member 24 results in that the end face is an inclined face corresponding to the opening end face, the minimum distance between the end face and the opening end face is L1.

In the first case, when the current collecting member 24 is installed inside the housing 21, and the end face of the second connecting portion 242 facing away from the first connecting portion 241 is flush with the opening end face of the housing 21, it indicates that the current collecting member 24 is installed in place, so as to facilitate locating the accurate installation position of the current collecting member 24. In the second case, the designed distance between the end face of the second connecting portion 242 facing away from the first connecting portion 241 and the opening end face of the housing 21 is beneficial to preventing the second connecting portion 242 of the current collecting member 24 from protruding out of the housing 21. In this way, when the battery cell 20 is also provided with the end cover 23 that overlaps the opening end face and is configured to cover the opening, it is ensured that the end cover 23 can be in contact with the opening end face first, such that a sealed connection can be realized between the end cover 23 and the housing 21.

According to some embodiments of this application, still referring to FIG. 7, the housing 21 has an opening and an opening end face surrounding the opening, and the battery cell 20 further induces an end cover 23 covering the opening, where the end cover 23 is welded to the opening end face of the housing 21 to form a second welding portion 28, and there is a distance between the first welding portion 26 and the second welding portion 28 along the axial direction Z of the electrode assembly 22.

The end cover 23 covers the opening to separate the cavity in the housing 21 from the external environment. The shape of the end cover 23 is not limited and is adapted to the shape of the housing 21 to fit the housing 21. In this example, the pole 25 can be installed on the end cover 23 in an insulating manner. In this case, both the positive electrode tab and the negative electrode tab are located at one end of the electrode assembly 22 facing the opening, so as to facilitate the connection of the negative electrode tab with the pole 25. Alternatively, the pole 25 may be installed at other positions of the housing 21 in an insulating manner.

In some embodiments, the end cover 23 and the housing 21 can be connected through welding. During welding, part of the end cover 23 and part of the housing 21 are melted, and the melted parts form the second welding portion 28. The second welding portion 28 can be formed by, for example, irradiating the current collecting member 24 with ultrasonic waves or laser beams. For example, the end cover 23 is irradiated with a laser beam to form the second welding portion 28, and the emitting direction of the laser beam is not limited.

FIG. 12 is a partial schematic diagram of a connection between a second connecting portion 242 and a housing 21 in a battery cell 20 of still another embodiment according to the embodiments of this application. In some embodiments, referring to FIG. 7 and FIG. 12, a laser beam can be emitted onto the end cover 23 along the axial direction Z parallel to the electrode assembly 22, and the laser beam penetrates through the end cover 23 and is emitted onto the housing 21, such that part of the end cover 23 and part of the housing 21 are melted to form the second welding portion 28.

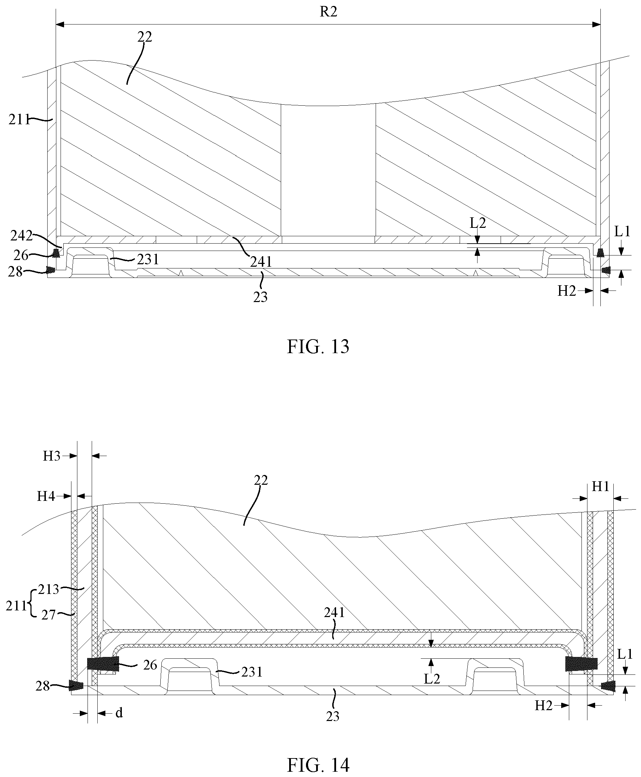

FIG. 13 and FIG. 14 are partial schematic diagrams of a connection between a second connecting portion 242 and a housing 21 in a battery cell 20 of another embodiment according to the embodiments of this application. In other embodiments, as shown in FIG. 13 and FIG. 14, part of the end cover 23 overlaps the opening end face of the housing 21, and laser beam can be emitted in the direction parallel to the opening end face to melt the end cover 23 and the housing 21 to form the second welding portion 28, and the end cover 23 is not broken down by laser beam.

According to some embodiments of this application, when the end face of the second connecting portion 242 facing away from the first connecting portion 241 is flush with the opening end face of the housing 21, and the battery cell 20 is provided with the end cover 23, the laser beam can be emitted onto the second connecting portion 242 in the direction perpendicular to the axial direction Z of the electrode assembly 22 inside the housing 21 to form the second welding portion 28.

Refer to FIG. 7, FIG. 12, FIG. 13, and FIG. 14. In general, regardless of the formation method of the first welding portion 26, the laser beam can be irradiated in the direction parallel to the axial direction Z of the electrode assembly 22 or parallel to the opening end face to form the second welding portion 28. In addition, along the axial direction Z of the electrode assembly 22, there is a distance between the first welding portion 26 and the second welding portion 28, such that the first welding portion 26 and the second welding portion 28 are not in contact.

In the foregoing embodiment, an exemplary assembly process of the battery cell 20 is as follows: The electrode assembly 22 is loaded into the cavity of the housing 21 from the opening, the current collecting member 24 is loaded into the cavity of the housing 21 from the opening, the second connecting portion 242 is welded to the housing 21 to form the first welding portion 26, the end cover 23 overlaps the opening end face to cover the opening, and the end cover 23 is welded to the housing 21 to form the second welding portion 28.

In the solution of the embodiments of this application, the first welding portion 26 and the second welding portion 28 are designed to have a distance along the axial direction Z of the electrode assembly 22. In this way, it can be avoided that a laser beam is emitted onto the first welding portion 26 when the end cover 23 and the housing 21 are melted by the laser beam to form the second welding portion 28, and the first welding portion 26 is prevented from being affected by the second welding portion 28.

According to some embodiments of this application, still referring to FIG. 7, the housing 21 has an opening and an opening end face surrounding the opening, and the battery cell 20 further includes an end cover 23 covering the opening, where the end cover 23 is welded to the opening end face of the housing 21 to seal the opening, the end cover 23 includes a protruding portion 231 protruding towards the inside of the housing 21, there is a gap between the protruding portion 231 and the inner side surface of the housing 21, and the second connecting portion 242 is at least partially accommodated in the gap.

The protruding portion 231 can be formed in various ways. For example, in the example shown in FIG. 7, an annular groove can be formed on the side of the end cover 23 facing away from the inside of the housing 21, and the protruding portion 231 is formed by a zone protruding from a surface of the end cover 23 toward the inside the housing 21 corresponding to the annular groove. In this case, the protruding portion 231 is annular. Alternatively, the protruding portion 231 may be a block-shaped structure protruding from the side of the end cover 23 facing away from the inside of the housing 21. At least part of the second connecting portion 242 is accommodated in the gap between the protruding portion 231 and the inner side surface of the housing 21, and therefore the protruding portion 231 can limit the movement of the second connecting portion 242 in a direction parallel to the opening end face to a certain extent.

The protruding portion 231 is provided on the side of the end cover 23 facing the inside of the housing 21, such that the structural strength of the end cover 23 is increased, which is beneficial to improving the safety performance of the battery cell 20. In addition, when the second welding portion 28 is configured to be formed by emitting a laser beam in the direction parallel to the opening end face to melt the end cover 23 and the housing 21, the protruding portion 231 can block the laser beam when the laser beam is emitted in the direction parallel to the opening end face after the end cover 23 is closed to the housing 21.

According to some embodiments of this application, when the end cover 23 is provided with the protruding portion 231, there are various cases in the positional relationship between the protruding portion 231 and the first connecting portion 241 of the current collecting member 24.

In a first case, as shown in FIG. 14, along the axial direction of the electrode assembly 22, a distance between the protruding portion 231 and the first connecting portion 241 is L2, where 0 mm≤L2≤1 mm. L2 may specifically be 0.2 mm, 0.5 mm, 0.7 mm, 0.8 mm, and 1 mm. This embodiment does not limit thereto.

It should be understood that when L2 is less than 0 mm, the positional relationship between the end cover 23 and the first connecting portion 241 are equivalent to interference fit, and the protruding portion 231 squeezes the first connecting portion 241. In this case, the current collecting member 24 is easily deformed by an extrusion force, resulting in the first welding portion 26 formed between the second connecting portion 242 and the housing 21 being easily torn. When L2 is greater than 1 mm, the distance between the protruding portion 231 and the first connecting portion 241 is large, and a gap is formed therebetween, which occupies the space of the battery cell 20 in the height direction, resulting in the reduction of the capacity of the active material inside the battery 100, and further affecting the energy density of the battery cell 20.

In a second case, as shown in FIG. 7, the protruding portion 231 is in contact with the surface of the first connecting portion 241 facing away from the electrode assembly 22.

According to the foregoing description, when the protruding portion 231 is in contact with the first connecting portion 241, in some embodiments, the protruding portion 231 can fit with the first connecting portion 241, but the protruding portion 231 does not apply a force to the first connecting portion 241. In this way, there is no gap between the protruding portion 231 and the first connecting portion 241 to occupy the internal space of the battery cell 20, and the protruding portion 231 does not squeeze the first connecting portion 241.

In the example shown in FIG. 14, when the distance between the protruding portion 231 and the first connecting portion 241 is L2, and 0 mm≤L2≤1 mm, the gap therebetween is small. This not only can prevent the protruding portion 231 from excessively squeezing the first connecting portion 241 and thus causing the welding position between the second connecting portion 242 and the housing 21 to tear, but also can be beneficial to ensuring the high strength of the first welding portion 26 formed by the first connecting portion 241 and the housing 21, thereby ensuring the connection stability of the current collecting member 24 and the housing 21. In addition, the space occupied by the gap in the height direction of the battery cell 20 can be reduced as much as possible without changing the overall height of the battery cell 20, such that the active material capacity in the battery cell 20 is high, and thus the battery cell 20 can be ensured to have a high energy density.

According to some embodiments of this application, a base material of the housing 21 is different from a base material of the current collecting member 24, and a melting point of the base material of the housing 21 is greater than a melting point of the base material of the current collecting member 24.

The base material of the housing 21 may be a material of the base layer 213 of the housing 21, and the base material of the current collecting member 24 may be a material of the base layer 213 of the current collecting member 24.

With this design, the melting point of the current collecting member 24 is lower than that of the housing 21, and when the current collecting member 24 is welded to the inner side surface of the housing 21 from the inside of the housing 21, the housing 21 is not easy to be punctured, which effectively reduces the risk of electrolyte leakage of the housing 21.

According to some embodiments of this application, based on the embodiment that the melting point of the base material of the housing 21 is greater than the melting point of the base material the current collecting member 24, a thermal expansion coefficient of the base material of the housing 21 may be less than a thermal expansion coefficient of the base material of the current collecting member 24.

According to some embodiments of this application, the base material of the housing 21 may be, for example, steel, in which case the base material of the current collecting member 24 may be, for example, copper or aluminum.

It should be noted that the applicant found through research that the main reason for leakage of the electrolyte in the battery 100 is that the thermal expansion coefficient of the material of the current collecting member 24 is quite different from that of the thermal expansion coefficient of the material of the end cover 23, which leads to microcracks at the welding position between the current collecting member 24 and the end cover 23.

The applicant creatively designed the current collecting member 24 and the inner side surface of the housing 21 to form the first welding portion 26, with the welding depth d1 formed by the first welding portion 26 on the housing 21 being less than the thickness H1 of the housing 21, which solves the problem of electrolyte leaking from microcracks at the welding position. On this basis, by designing the base material of the housing 21 as steel and the base material of the current collecting member 24 as copper or aluminum, not only can the housing 21 have higher structural strength, the safety of the battery cell 20 is enhanced, but also the manufacturing cost of the battery cell 20 can be reduced.

According to some embodiments of this application, still referring to FIG. 14, the surface of the housing 21 and/or the current collecting member 24 is provided with a welding aid layer 27.

To be specific, the housing 21 may include a base layer 213 and a welding aid layer 27, where the welding aid layer 27 is provided on the inner and outer side surfaces of the base layer 213. In this case, thickness H1 of the housing 21, thickness H3 of the base layer 213, and thickness H4 of the welding aid layer 27 satisfy H1=H3+2×H4. The welding aid layer 27 can be made through electroplating. The material of the welding aid layer 27 may be, for example, rosin, and the welding aid layer 27 can also be, for example, a nickel plating layer. The thickness of the welding aid layer 27 can be designed to be greater than or equal to 1 µm (micron) and less than or equal to 3 µm. Similarly, the current collecting member 24 may also include a base layer 213 and a welding aid layer 27, a structure of the current collecting member 24 is similar to that of the housing 21. Details are not repeated herein.

The presence of such welding aid layer 27 is beneficial to improving the welding effect between the current collecting member 24 and the housing 21.

According to some embodiments of this application, as shown in FIG. 14, the housing 21 includes a base layer 213, a welding aid layer 27 is provided on the base layer 213, and part of the first welding portion 26 is located in the base layer 213.

It should be understood that when the welding aid layer 27 is provided on the surfaces of the housing 21 and the current collecting member 24, in the process of welding the second connecting portion 242 of the current collecting member 24 to the housing 21, a laser beam can be emitted onto the second connecting portion 242 in the direction perpendicular to the axial direction Z of the electrode assembly 22. The laser beam passes through the welding aid layer 27 located on the inner side surface of the second connecting portion 242, the base layer 213 of the current collecting member 24, the welding aid layer 27 located on the outer side surface of the second connecting portion 242, and the welding aid layer 27 located on the inner side surface of the housing 21 in sequence, and then the laser beam is emitted onto the base layer 213 of the housing 21, with a depth of the melting zone formed on the base layer 213 of the housing 21 being less than the thickness of the base layer 213 of the housing 21.

The welding aid layer 27 has a small thickness. Therefore, the part of the first welding portion 26 is designed to be located in the base layer 213, such that the current collecting member 24 can be welded to the base layer 213 of the housing 21, which is beneficial to enhancing the connection reliability between the current collecting member 24 and the housing 21.

According to some embodiments of this application, the first welding portion 26 may alternatively be configured not to penetrate through the base layer 213 of the housing 21.

Because the thickness of the welding aid layer 27 is small, the first welding portion 26 is designed not to penetrate the base layer 213 of the housing 21, which further ensures that the first welding portion 26 does not penetrate through the housing 21, thereby reducing the probability of the electrolyte overflowing outside the housing 21 due to cracks in the first welding portion 26.

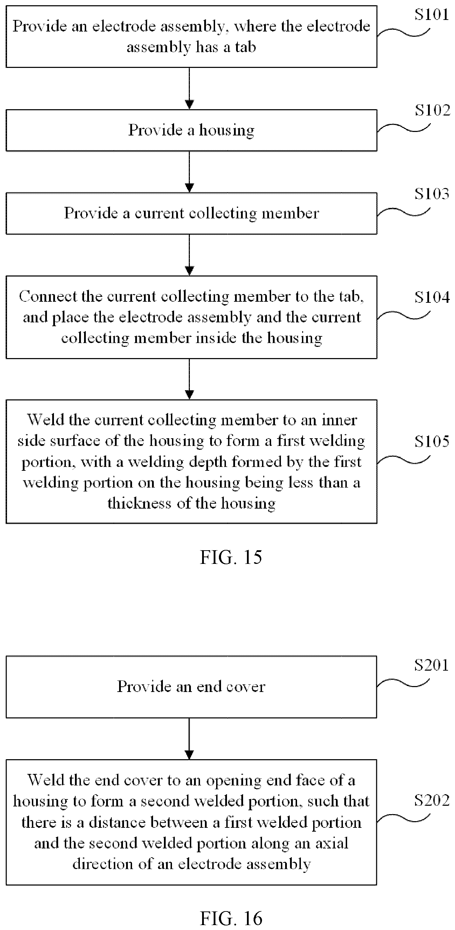

According to some embodiments of this application, refer to FIG. 15, and the manufacturing method of the battery cell 20 may specifically include the following steps:
Step S101: Provide an electrode assembly 22, where the electrode assembly 22 has a tab.
Step S102: Provide a housing 21.
Step S103: Provide a current collecting member 24.
Step S104: Connect the current collecting member 24 to the tab, and place the electrode assembly 22 and the current collecting member 24 inside the housing 21.
Step S105: Weld the current collecting member 24 to an inner side surface of the housing 21 to form a first welding portion 26, with a welding depth d1 formed by the first welding portion 26 on the housing 21 being less than a thickness H1 of the housing 21.

It should be understood that in the method of this embodiment, the sequence of step S101, step S102, and step S103 is not limited. For example, step S101, step S102, and step S103 may be performed in sequence.

According to some embodiments of this application, the foregoing step S104 can be specifically implemented by the following steps:
Step 1: Connect the current collecting member 24 and the tab.
Step 2: Place the electrode assembly 22 connected to the current collecting member 24 inside the housing 21.

In some other embodiments, the foregoing step S104 can be specifically implemented by the following steps:
Step 1: Place the electrode assembly 22 inside the housing 21.
Step 2: Place the current collecting member 24 inside the housing 21.
Step 3: Connect the current collecting member 24 and the tab.

According to some embodiments of this application, step S105 can be realized in the following manner. For example, a laser beam can be emitted from the inside of the housing 21 in a direction perpendicular to the axial direction of the electrode assembly 22 to melt the housing 21 and the current collecting member 24 to form the first welding portion 26. For another example, a laser beam can also be emitted in a direction parallel to the axial direction of the electrode assembly 22 to melt the housing 21 and the current collecting member 24 to form the first welding portion 26.

According to some embodiments of this application, referring to FIG. 16, the manufacturing method may further include the following steps.

Step S201: Provide an end cover 23.

Step S202: Weld the end cover 23 to an opening end face of the housing 21 to form a second welding portion 28, such that there is a distance between the first welding portion 26 and the second welding portion 28 along an axial direction Z of the electrode assembly 22.

According to some embodiments of this application, the foregoing step S202 of welding the end cover 23 to an opening end face of the housing 21 to form a second welding portion 28 can be specifically implemented by the following steps.

Step 1: Overlap part of the end cover 23 on the opening end face of the housing 21.

Step 2: Emit a laser beam in a direction parallel to the opening end face of the housing 21 to melt the end cover 23 and the housing 21 to form the second welding portion 28.

It should be understood that the battery cell 20 shown in FIG. 13 or FIG. 14 can be manufactured by the manufacturing method of this embodiment.

It should be noted that reference may be made to the battery cell 20 provided in the foregoing embodiments for related structures of a battery cell 20 manufactured by the manufacturing method of the foregoing embodiments, and details are not described again herein.

In a specific embodiment, as shown in FIG. 6 and FIG. 7, the battery cell 20 includes a housing 21, a current collecting member 24, and an end cover 23, where the housing 21 has an opening, and the end cover 23 covers the opening and is connected to the housing 21 to form an environment separated from the outside of the battery cell 20. The electrode assembly 22 and the current collecting member 24 are installed in the housing 21. The current collecting member 24 includes a first connecting portion 241 and a second connecting portion 242, where the second connecting portion 242 is connected to an edge of the first connecting portion 241 and extends toward the opening. The second connecting portion 242 is welded to the housing 21 to form a first welding portion 26, with a welding depth d1 formed by the first welding portion 26 on the housing 21 being less than a thickness H1 of the housing 21, where the welding depth d1 formed by the first welding portion 26 on the housing 21 is greater than or equal to 0.05 mm and less than or equal to 0.3 mm.

The housing 21 has an opening end face surrounding the opening, and a surface of the second connecting portion 242 facing away from the first connecting portion 241 is closer to the electrode assembly 22 than the opening end face of the housing 21. In the axial direction of the electrode assembly 22, a distance between the end face of the second connecting portion 242 facing away from the first connecting portion 241 and the opening end face of the housing 21 is L1, where 0 mm≤L1≤2 mm.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
an electrode assembly having a tab;
a housing configured to accommodate the electrode assembly; and
a current collecting member accommodated in the housing and connected to the tab,
wherein the current collecting member is welded to an inner side surface of the housing to form a first welding portion, with a welding depth formed by the first welding portion on the housing being less than a thickness of the housing.

2. The battery cell according to claim 1, wherein the housing has an opening, and the tab is located at one end of the electrode assembly close to the opening.

3. The battery cell according to claim 1 or 2, wherein the inner side surface of the housing comprises a first surface and a second surface, wherein the first surface is arranged opposite the electrode assembly, the second surface is located on a side of the first surface close to the opening of the housing, an orthogonal projection of the first surface along an axial direction of the electrode assembly coincides with an orthogonal projection of the second surface along the axial direction of the electrode assembly, and the first welding portion is formed on the second surface.

4. The battery cell according to any one of claims 1 to 3, wherein the current collecting member comprises a first connecting portion and a second connecting portion that are connected to each other, wherein the first connecting portion is connected to the tab, the second connecting portion fits with the inner side surface of the housing, and the second connecting portion is welded to the inner side surface of the housing to form at least one first welding portion.

5. The battery cell according to claim 4, wherein the second connecting portion is provided at an outer edge of the first connecting portion, and the second connecting portion is located on a side of a plane on which the first connecting portion is located.

6. The battery cell according to claim 5, wherein at least part of an outer side surface of the second connecting portion fits with the inner side surface of the housing;
wherein the outer side surface of the second connecting portion is a surface close to the inner side surface of the housing.

7. The battery cell according to claim 6, wherein the outer side surface of the second connecting portion integrally fits with the inner side surface of the housing.

8. The battery cell according to claim 4, wherein the first connecting portion has a flat structure, an outer side surface of the second connecting portion has a first projection on a plane on which the first connecting portion is located, and the first projection coincides with an outer side surface of the first connecting portion, wherein the outer side surface of the first connecting portion is a surface facing the inner side surface of the housing.

9. The battery cell according to claim 4, wherein the first welding portion is configured not to penetrate the second connecting portion along the axial direction of the electrode assembly.

10. The battery cell according to claim 4, wherein the second connecting portion comprises an abutting portion and a guide portion, the abutting portion fitting with the inner side surface of the housing, and at least part of the abutting portion being welded to the inner side surface of the housing; and
one end of the guide portion is connected to the abutting portion, another end of the guide portion is connected to the first connecting portion, and a distance between the guide portion and the inner side surface of the housing gradually increases from the one end of the guide portion to the other end.

11. The battery cell according to claim 10, wherein the first welding portion is configured not to penetrate the abutting portion along the axial direction of the electrode assembly.

12. The battery cell according to any one of claims 4 to 11, wherein the second connecting portion and the first connecting portion are fixedly connected through a connector; or the second connecting portion and the first connecting portion are formed into an integral member through an integral molding process.

13. The battery cell according to any one of claims 4 to 12, wherein the current collecting member comprises only one second connecting portion, the second connecting portion being an annular structure extending along a circumferential direction of the inner side surface of the housing.

14. The battery cell according to claim 13, wherein the second connecting portion is welded to the inner side surface of the housing to form a plurality of first welding portions, and the plurality of first welding portions are spaced apart from each other along the circumferential direction of the inner side surface of the housing.

15. The battery cell according to claim 14, wherein at least two of the first welding portions are symmetrically arranged along a central axis of the housing.

16. The battery cell according to claim 15, wherein spacing angles between any two adjacent first welding portions along the circumferential direction of the inner side surface of the housing are equal.

17. The battery cell according to claim 13, wherein the second connecting portion is welded to the inner side surface of the housing to form the first welding portion, the first welding portion has an annular structure extending along the circumferential direction of the inner side surface of the housing, and the second connecting portion is sealingly connected to the housing.

18. The battery cell according to any one of claims 4 to 12, wherein the current collecting member comprises a plurality of second connecting portions, and the plurality of second connecting portions are spaced apart from each other along the circumferential direction of the inner side surface of the housing.

19. The battery cell according to claim 18, wherein spacing angles between any two adjacent second connecting portions along the circumferential direction of the inner side surface of the housing are equal.

20. The battery cell according to claim 18, wherein each second connecting portion is welded to the inner side surface of the housing to form one first welding portion.

21. The battery cell according to any one of claims 4 to 20, wherein the housing comprises a peripheral side wall, and an inner wall surface of the peripheral side wall forms the inner side surface of the housing, wherein a thickness of the peripheral side wall is a first thickness, H1, a thickness of the second connecting portion is a second thickness, H2, and 0.3≤H1/H2≤3.

22. The battery cell according to claim 21, wherein 0.8≤H1/H2≤2.75.

23. The battery cell according to claim 21 or 22, wherein 0.2 mm≤H1≤0.6 mm; and/or 0.2 mm≤H2≤0.6 mm.

24. The battery cell according to any one of claims 4 to 23, wherein the first connecting portion is circular, the circular first connecting portion has a diameter of greater than or equal to 15 mm and less than or equal to 100 mm, and the second connecting portion has a height of greater than or equal to 0.1 mm and less than or equal to 10 mm along the axial direction of the electrode assembly.

25. The battery cell according to any one of claims 4 to 24, wherein the housing has an opening and an opening end face surrounding the opening, and an end face of the second connecting portion facing away from the first connecting portion is flush with the opening end face of the housing; or an end face of the second connecting portion facing away from the first connecting portion is closer to the electrode assembly than the opening end face of the housing, and along the axial direction of the electrode assembly, a distance between the end face of the second connecting portion facing away from the first connecting portion and the opening end face of the housing is L1, wherein 0 mm≤L1≤2 mm.

26. The battery cell according to any one of claims 1 to 25, wherein the housing has an opening and an opening end face surrounding the opening, and the battery cell further comprises an end cover covering the opening, wherein the end cover is welded to the opening end face of the housing to form a second welding portion, and there is a distance between the first welding portion and the second welding portion along the axial direction of the electrode assembly.

27. The battery cell according to claim 26, wherein part of the end cover overlaps the opening end face of the housing, and the second welding portion is formed using a laser beam emitted in a direction parallel to the opening end face to melt the end cover and the housing.

28. The battery cell according to any one of claims 4 to 27, wherein the housing has an opening and an opening end face surrounding the opening, and the battery cell further comprises an end cover covering the opening, wherein the end cover is welded to the opening end face of the housing to seal the opening, the end cover comprises a protruding portion protruding towards the inside of the housing, there is a gap between the protruding portion and the inner side surface of the housing, and the second connecting portion is at least partially accommodated in the gap.

29. The battery cell according to claim 28, wherein the protruding portion is in contact with a surface of the first connecting portion facing away from the electrode assembly; or along the axial direction of the electrode assembly, a distance between the protruding portion and the first connecting portion is L2, wherein 0 mm≤L2≤1 mm.

30. The battery cell according to any one of claims 1 to 29, wherein a base material of the housing is different from a base material of the current collecting member, and a melting point of the base material of the housing is greater than a melting point of the base material of the current collecting member.

31. The battery cell according to claim 30, wherein a thermal expansion coefficient of the base material of the housing is less than a thermal expansion coefficient of the base material of the current collecting member.

32. The battery cell according to claim 31, wherein the base material of the housing is steel, and the base material of the current collecting member is copper or aluminum.

33. The battery cell according to any one of claims 1 to 32, wherein a welding aid layer is provided on a surface of the housing and/or the current collecting member.

34. The battery cell according to claim 33, wherein the housing comprises a base layer, the welding aid layer is provided on the base layer, and part of the first welding portion is located in the base layer.

35. The battery cell according to claim 34, wherein the first welding portion is configured not to penetrate the base layer of the housing.

36. A battery, comprising the battery cell according to any one of claims 1 to 35.

37. An electric apparatus, comprising the battery according to claim 36.

38. A manufacturing method of a battery cell, comprising:
providing an electrode assembly, wherein the electrode assembly has a tab;
providing a housing;
providing a current collecting member;
connecting the current collecting member and the tab, and placing the electrode assembly and the current collecting member inside the housing; and
welding the current collecting member to an inner side surface of the housing to form a first welding portion, with a welding depth formed by the first welding portion on the housing being less than a thickness of the housing.

39. The manufacturing method according to claim 38, wherein the connecting the current collecting member and the tab, and placing the electrode assembly and the current collecting member inside the housing specifically comprises: connecting the current collecting member and the tab, and placing the electrode assembly connected to the current collecting member inside the housing; or
placing the electrode assembly inside the housing, placing the current collecting member inside the housing, and connecting the current collecting member to the tab.

40. The manufacturing method according to claim 38 or 39, wherein the welding the current collecting member to an inner side surface of the housing to form a first welding portion specifically comprises:
emitting a laser beam from the inside of the housing in a direction perpendicular to an axial direction of the electrode assembly to melt the housing and the current collecting member to form the first welding portion; or
emitting a laser beam in a direction parallel to an axial direction of the electrode assembly to melt the housing and the current collecting member to form the first welding portion.

41. The manufacturing method according to any one of claims 38 to 40, wherein
after said welding the current collecting member to an inner side surface of the housing to form a first welding portion, with a welding depth formed by the first welding portion on the housing being less than a thickness of the housing, the manufacturing method further comprises:
providing an end cover; and
welding the end cover to an opening end face of the housing to form a second welding portion, wherein there is a distance between the first welding portion and the second welding portion along the axial direction of the electrode assembly.

42. The manufacturing method according to claim 41, wherein the welding the end cover to an opening end face of the housing to form a second welding portion specifically comprises:
overlapping part of the end cover on the opening end face of the housing; and
emitting a laser beam in a direction parallel to the opening end face of the housing to melt the end cover and the housing to form the second welding portion.
